# EUROPÄISCHE PATENTANMELDUNG

(11) **EP 0 999 383 A2**
(43) Veröffentlichungstag der Anmeldung: **10.05.2000**
(21) Anmeldenummer: 99120203.7
(22) Anmeldetag: 09.10.1999
(51) Int. Cl.: F16H 59/02

(54) **Wähleinrichtung für ein automatisches Getriebe eines Kraftfahrzeugs**

(30) Priorität: 03.11.1998 DE 19850685
(71) Anmelder: Bayerische Motoren Werke Aktiengesellschaft, 80809 München (DE)
(72) Erfinder: Neuner, Josef, 83064 Raubling (DE); Ehrmaier, Rudolf, 81927 München (DE)

(57) **Zusammenfassung**

Es wird eine Wähleinrichtung zum Auswählen von Betriebsstellungen eines Automatikgetriebes eines Kraftfahrzeugs durch Auslenken eines Wählhebels beschrieben, der sich aus allen Auslenkrichtungen zum Anwählen der einzelnen Betriebsstellungen selbsttätig zurückstellt. Das Automatikgetriebe kann mit diesem in einer ersten Betriebsart, Auswählen einzelner Fahrstufen im Automatikbetrieb, oder einer zweiten Betriebsart, schrittweises Schalten der Gänge im manuellen Betrieb, gesteuert werden, wobei für jede Betriebsart, jeder Auslenkrichtung des Wählhebels jeweils eine Betriebsstellung des Automatikgetriebes zugeordnet ist. Die Erfindung ist dadurch gekennzeichnet, daß mit dem Wählhebel, in zwei im wesentlichen senkrecht aufeinander stehenden Schaltgassen, in jeder der zwei Betriebsarten maximal vier Betriebsstellungen auswählbar sind und daß in einer dritten Betriebsart mit dem Wählhebel Tempomatfunktionen gesteuert werden können.

## Beschreibung

Die Erfindung betrifft eine Wähleinrichtung für ein automatisches Getriebe eines Kraftfahrzeugs nach dem Oberbegriff des Hauptanspruchs.

Es ist bereits bekannt, ein automatisch geschaltetes Kraftfahrzeuggetriebe und seine Wähleinrichtung so zu gestalten, daß der Fahrer mit der Wähleinrichtung die Möglichkeit hat, sich für Schrittschaltbetrieb oder Fahrstufenautomatik zu entscheiden.

Bei der Fahrstufenautomatik ist der Betriebsbereich des automatisch geschalteten Kraftfahrzeuggetriebes in verschiedene, manuell vorwählbare Betriebsstufen unterteilt, die als Fahrstufen bezeichnet werden und die verschiedene Fahrzeugbetriebszustände darstellen. Der Begriff Fahrstufen, wie er hier verwendet wird, umfaßt alle Betriebsstufen eines automatisch geschalteten Kraftfahrzeuggetriebes, also auch die Park- oder Neutralposition.

Im Schrittschaltbetrieb wird das automatisch geschaltete Kraftfahrzeuggetriebe vom Fahrer manuell geschaltet. Er kann durch Verschwenken des Wählhebels aus einer Mittelstellung heraus jeweils einen Gang hoch- oder zurückschalten, je nachdem, in welche Richtung er den Wählhebel bewegt. Nach jedem Schaltvorgang stellt sich der Wählhebel in seine Mittelstellung zurück.

Eine Wähleinrichtung mit einer Betätigungsebene in Fahrzeuglängsrichtung und einer senkrecht dazu stehenden Betätigungsebene, bei der sich der Wählhebel aus manchen Betätigungsrichtungen selbsttätig in seine Ausgangslage zurückstellt, beschreibt die DE 39 29 268 A1.

Da hier über den Wählhebel nur das Steuergerät des automatisch geschalteten Kraftfahrzeuggetriebes angesteuert wird, ist zum Ansteuern von Tempomatfunktionen ein weiteres Betätigungselement notwendig.

Daher ist es Aufgabe der Erfindung, eine Wähleinrichtung für ein automatisch geschaltetes Kraftfahrzeuggetriebe so auszubilden, daß ein Betätigungselement zur Ansteuerung von Tempomatfunktionen nicht notwendig ist.

Die Aufgabe wird erfindungsgemäß mit den kennzeichnenden Merkmalen des Anspruchs 1 gelöst. Weitere vorteilhafte Ausgestaltungen der Erfindung ergeben sich aus den Unteransprüchen.

Nach der Erfindung werden bei einer Wähleinrichtung zum Auswählen von Betriebsstellungen eines Automatikgetriebes eines Kraftfahrzeugs durch Auslenken eines Wählhebels, der sich aus allen Auslenkrichtungen zum Anwählen der einzelnen Betriebsstellungen selbsttätig zurückstellt und mit dem das Automatikgetriebe in einer ersten Betriebsart, Auswählen einzelner Fahrstufen im Automatikbetrieb, oder einer zweiten Betriebsart, schrittweises Schalten der Gänge im manuellen Betrieb, über eine Getriebesteuereinrichtung gesteuert werden kann, wobei für jede Betriebsart, jeder Auslenkrichtung des Wählhebels jeweils eine Betriebsstellung des Automatikgetriebes zugeordnet ist, Tempomatfunktionen dadurch gesteuert, daß mit dem Wählhebel, in zwei im wesentlichen senkrecht aufeinander stehenden Schaltgassen, in jeder der zwei Betriebsarten maximal vier Betriebsstellungen auswählbar sind und daß eine dritte Betriebsart vorhanden ist, in der mit dem Wählhebel Tempomatfunktionen gesteuert werden können.

Ist ein Betätigungselement zur Ansteuerung von Tempomatfunktionen nicht notwendig, so hat das Vorteile im Package, der Einsparung von Kosten und von Gewicht.

Bei einer bevorzugten Ausführung der Erfindung ist vorgesehen, daß die Wähleinrichtung eine vom Wählhebel getrennte Umschalteinrichtung zum Umschalten zwischen den Betriebsarten besitzt. Das hat den Vorteil, daß die einzelnen Betriebsarten auf einfache Weise ausgewählt werden können.

Ist der Wählhebel als Lenkstockhebel ausgebildet, so kann zum Bedienen der Wähleinrichtung vorteilhafterweise die Hand des Fahrers am Lenkrad verbleiben, ebenso wenn der Wählhebel direkt am Lenkrad angebracht ist.

Bei einer weiteren bevorzugten Ausführung der Erfindung ist vorgesehen, daß eine vom Wählhebel getrennte Umschalteinrichtung am Lenkrad, insbesondere durch Drucktaster, ausgebildet ist. So kann auch zum Bedienen der Umschalteinrichtung die Hand des Fahrers am Lenkrad verbleiben.

Bei einer vorteilhaften Ausführung der Erfindung ist vorgesehen, daß eine im wesentlichen von einem Fahrer weg gerichtete Bewegung des Wählhebels in der ersten Betriebsart, bei stillstehendem Fahrzeug, Einlegen der Fahrstufe D des Automatikgetriebes, und bei vorwärts fahrendem Fahrzeug, Halten einer konstanten Geschwindigkeit, und in der zweiten Betriebsart, sequentielles Hochschalten des Automatikgetriebes, und in der dritten Betriebsart, Beschleunigen während der Fahrt, bewirkt.

Bei einer weiteren vorteilhaften Ausführung der Erfindung ist vorgesehen, daß eine im wesentlichen zu einem Fahrer hin gerichtete Bewegung des Wählhebels in der ersten Betriebsart, bei stillstehendem Fahrzeug, Einlegen der Fahrstufe R des Automatikgetriebes, und in der zweiten Betriebsart sequentielles Zurückschalten des Automatikgetriebes, und in der dritten Betriebsart, Reduzieren der gegenwärtigen Geschwindigkeit bis zum Stillstand, bewirkt.

Desweiteren ist vorteilhaft, wenn eine im wesentlichen quer zu einem Fahrer, zu diesem hin oder nach oben gerichtete Bewegung des Wählhebels in der ersten Betriebsart, Einlegen der Fahrstufe P des Automatikgetriebes, und in der dritten Betriebsart, Löschen der gegenwärtigen Einstellungen, bewirkt.

Ebenso wenn eine im wesentlichen quer zu einem Fahrer, von diesem weg oder nach unten gerichtete Bewegung des Wählhebels in der ersten Betriebsart, Einlegen der Fahrstufe N des Automatikgetriebes, und in der dritten Betriebsart, Löschen der gegenwärtigen Einstellungen, bewirkt.

Eine Kombination dieser Wählhebelfunktionen bewirkt vorteilhafterweise insgesamt eine ergonomisch günstige Anordnung aller einzelnen auswählbaren Betriebsstellungen des automatisch geschalteten Getriebes und der Tempomatfunktionen.

Bei einer weiteren bevorzugten Ausführung der Erfindung ist vorgesehen, daß eine Wähleinrichtung so ausgeführt ist, daß, bei einer Fahrgeschwindigkeit des Kraftfahrzeugs unterhalb einem bestimmten Betrag, die Getriebesteuereinrichtung selbsttätig von der eventuell ausgewählten dritten Betriebsart in die erste Betriebsart umschaltet. Liegt der Betrag der Fahrgeschwindigkeit, unterhalb dessen ein selbsttätiges Umschalten stattfindet, zum Beispiel bei 20 km/h, hat das den Vorteil, daß der Fahrer, in Geschwindigkeitsbereichen, in denen Tempomatfunktionen selten benötigt werden, aus diesen nicht aktiv herausschalten muß.

Bevorzugte Ausführungsbeispiele der Erfindung sind in der nachfolgenden Beschreibung und der zugehörigen Zeichnung näher dargestellt. Es zeigen:
- Figur 1: schematisch einen sich in seine Ausgangsposition selbsttätig zurückstellenden Wählhebel auf der Mittelkonsole eines Kraftfahrzeugs, mit zwei senkrecht aufeinander stehenden Betätigungsebenen,
- Figur 2: schematisch einen sich in seine Ausgangsposition selbsttätig zurückstellenden Wählhebel eines Kraftfahrzeugs, als Lenkstockschalter ausgebildet, mit zwei senkrecht aufeinander stehenden Betätigungsebenen und
- Figur 3: schematisch einen sich in seine Ausgangsposition selbsttätig zurückstellenden Wählhebel am Lenkrad eines Kraftfahrzeugs, mit zwei senkrecht aufeinander stehenden Betätigungsebenen.

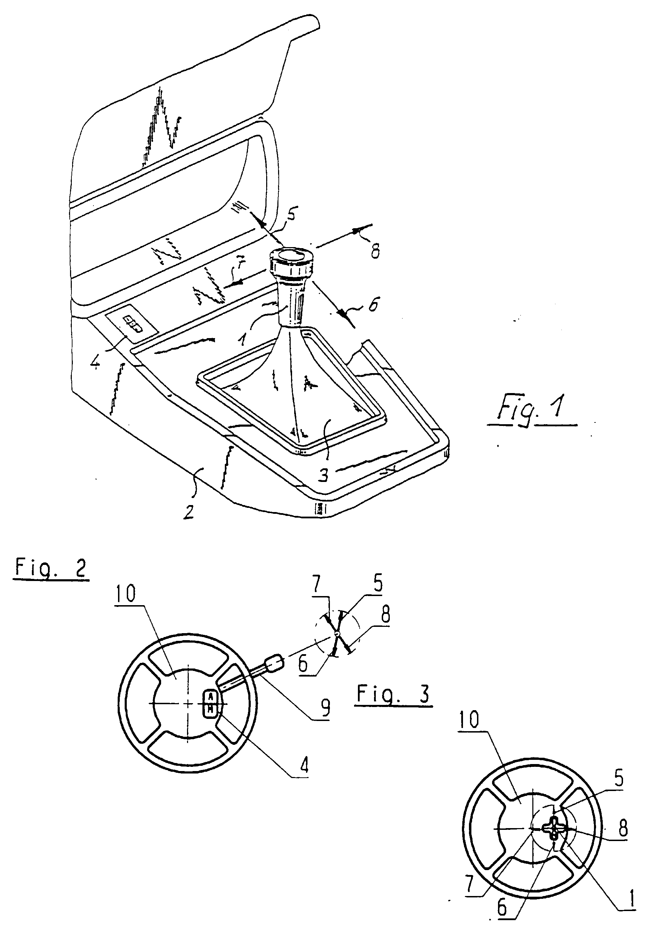

Nach Figur 1 sitzt ein Wählhebel 1 auf einer Mittelkonsole 2 eines nicht weiter dargestellten Kraftfahrzeuges. Der Wählhebel 1 dient als Wähleinrichtung zum Einlegen einzelner Betriebsstellungen eines ebenfalls nicht dargestellten Kraftfahrzeuggetriebes und weist hierfür durch eine Manschette 3 nicht einsehbar, an seinem unteren Ende elektrische Kontakte auf. Durch Schließen der Kontakte bei Betätigung des Wählhebels 1 werden Schaltbefehle an eine Auswerteschaltung abgegeben. Die Auswerteschaltung ist nicht Gegenstand der Erfindung und daher nicht gezeichnet und nicht näher erläutert. Es sei nur so viel erwähnt, daß sie ohne weiteres von einem Fachmann aufgebaut werden kann und vorzugsweise einen Mikrocomputer enthält. Ihre Aufgabe ist es, unter anderem Stellglieder für das Kraftfahrzeuggetriebe anzusteuern.

Der Wählhebel 1 läßt sich in zwei senkrecht aufeinander stehenden Betätigungsebenen verschieben. Es ergeben sich dabei vier Richtungen, die in Figur 1 mit entsprechenden Pfeilen gekennzeichnet sind. Jeder der vier Pfeile 5, 6, 7, 8 zeigt jeweils eine Bewegungsmöglichkeit für den Wählhebel 1, zum Anwählen einer neuen Betriebsstellung eines Automatikgetriebes jeweils für die Betriebsarten Fahrstufenautomatik, Schrittschaltbetrieb und zur Steuerung von Tempomatfunktionen. Das Umschalten zwischen den Betriebsarten Schrittschaltbetrieb und Fahrstufenautomatik und zur Steuerung der Tempomatfunktionen über den Wählhebel 1 erfolgt an einer Umschalteinrichtung 4, die vom Wählhebel 1 getrennt an der Mittelkonsole 2 angebracht ist. Die Umschalteinrichtung 4 besteht aus drei Druckschaltern zum Auswählen jeweils einer der drei Betriebsarten für den Wählhebel 1.

In der ersten Betriebsart, Auswählen einzelner Fahrstufen im Automatikbetrieb, werden die verschiedenen Betriebsstellungen des Automatikgetriebes, entsprechend der Auslenkrichtungen des Wählhebels 1, in Fahrzeuglängsrichtung durch die Pfeile 5 und 6 dargestellt. Wird der Wählhebel 1 in die Richtung des Pfeiles 5 ausgelenkt, so wird die Fahrstufe D für Vorwärtsfahrbetrieb eingelegt, bei Bewegung des Wählhebels 1 in Richtung des Pfeiles 6, die Fahrstufe R für Rückwärtsfahrbetrieb. Senkrecht dazu kann der Wählhebel 1 in die Richtung des Pfeiles 7 ausgelenkt werden, wodurch die Fahrstufe P, die Parksperre, eingelegt wird. Bei Bewegung des Wählhebels 1 in Richtung des Pfeiles 8, wird die Fahrstufe N, Neutral, eingelegt, das heißt, das Fahrzeug steht still, da der Kraftfluß im Antriebsstrang unterbrochen ist.

Der Wählhebel 1 stellt sich nach seinem Auslenken immer wieder selbsttätig in die gezeichnete Betätigungsposition zum Auswählen einzelner Fahrstufen im Automatikbetrieb zurück. Von dieser Betriebsart Fahrstufenautomatik kann durch Betätigen der dafür vorgesehenen Drucktaste der Umschalteinrichtung 4 in eine zweite Betriebsart, Schrittschaltbetrieb, umgeschaltet werden.

In dieser zweiten Betriebsart, für schrittweises Schalten der Gänge im manuellen Betrieb, können die einzelnen Gänge sequentiell durch Bewegen des Wählhebels 1 in Richtung des Pfeiles 5 hochgeschaltet und durch Bewegen in Richtung des Pfeiles 6 heruntergeschaltet werden. Der Wählhebel 1 stellt sich dabei ebenfalls immer wieder selbsttätig in die gezeichnete Betätigungsposition für Schrittschaltbetrieb zurück. Ein Schwenken des Wählhebels 1 in Richtung des Pfeiles 5 legt in dieser Betriebsart Schrittschaltbetrieb den nächsthöheren Gang im Kraftfahrzeuggetriebe ein. Für weiteres manuelles Hochschalten wird der Wählhebel 1 auf dieselbe Weise in dieselbe Richtung geschwenkt. Beim Verschwenken des Wählhebels 1 in Richtung des Pfeiles 6 wird stufenweise zurückgeschaltet.

Eine dritte Betriebsart, in die der Wählhebel 1 durch Betätigen der dafür vorgesehenen Drucktaste der Umschalteinrichtung 4 umgeschaltet werden kann, dient dem Steuern von Tempomatfunktionen durch den Wählhebel 1. Dabei bewirkt eine im wesentlichen von dem Fahrer weg gerichtete Bewegung des Wählhebels 1, in Richtung des Pfeiles 5, ein Beschleunigen des Kraftfahrzeugs während der Fahrt. Eine im wesentlichen zu dem Fahrer hin gerichtete Bewegung des Wählhebels 1, in Richtung des Pfeiles 6, reduziert dagegen die gegenwärtige Geschwindigkeit sukzessive bis zum Stillstand. Eine im wesentlichen quer zu dem Fahrer hin gerichtete Bewegung des Wählhebels 1, in Richtung des Pfeiles 7, bewirkt das Löschen der gegenwärtigen Einstellungen, und eine Bewegung in Gegenrichtung, in Richtung des Pfeiles 8, im wesentlichen quer zum Fahrer, von diesem weg gerichtet, bewirkt ebenfalls das Löschen der gegenwärtigen Einstellungen.

Figur 2 zeigt eine Wähleinrichtung entsprechend der von Figur 1, allerdings ist hier der Wählhebel als Lenkstockhebel 9 ausgebildet. Die vier Pfeile 5, 6, 7, 8 zeigen, entsprechend der Beschreibung zu Figur 1, dieselben Bewegungsmöglichkeiten für den Lenkstockhebel 9 zum Anwählen neuer Betriebsstellungen des Automatikgetriebes für dieselben Betriebsarten, Fahrstufenautomatik und Schrittschaltbetrieb und die Steuerung der Tempomatfunktionen. Allerdings wird bei dieser Anordnung die Querbewegung des Wählhebels 1 aus Figur 1 in Richtung der Pfeile 7,8 zu einer Bewegung im wesentlichen nach oben gerichtet, Pfeil 7, Figur 2 und im wesentlichen nach unten gerichtet, Pfeil 8, Figur 2. Das Umschalten zwischen den Betriebsarten Schrittschaltbetrieb und Fahrstufenautomatik erfolgt hier an der Umschalteinrichtung 4, die vom Lenkstockhebel 9 getrennt an einem Lenkrad 10 angebracht ist. Die Umschalteinrichtung 4 besteht aus zwei Druckschaltern zum Auswählen jeweils der ersten oder der zweiten Betriebsart für das Automatikgetriebe.

Figur 3 zeigt eine weitere Wähleinrichtung entsprechend der von Figur 1, allerdings ist hier der Wählhebel 1 direkt am Lenkrad 10 ausgebildet. Die vier Pfeile 5, 6, 7, 8 zeigen ebenfalls, entsprechend der Beschreibung zu Figur 1, dieselben Anwählmöglichkeiten neuer Betriebsstellungen des Automatikgetriebes durch den Wählhebel 1, für dieselben Betriebsarten Fahrstufenautomatik und Schrittschaltbetrieb und zusätzlich die Steuerung der Tempomatfunktionen. Das Umschalten zwischen den Betriebsarten erfolgt hier an einer ebenfalls vom Wählhebel 1 getrennten Umschalteinrichtung, die allerdings nicht gezeichnet ist.

## Patentansprüche

1. Wähleinrichtung zum Auswählen von Betriebsstellungen eines Automatikgetriebes eines Kraftfahrzeugs durch Auslenken eines Wählhebels (1), der sich aus allen Auslenkrichtungen zum Anwählen der einzelnen Betriebsstellungen selbsttätig zurückstellt und mit dem das Automatikgetriebe in einer ersten Betriebsart, Auswählen einzelner Fahrstufen im Automatikbetrieb, oder einer zweiten Betriebsart, schrittweises Schalten der Gänge im manuellen Betrieb, über eine Getriebesteuereinrichtung gesteuert werden kann, wobei für jede Betriebsart, jeder Auslenkrichtung des Wählhebels (1) jeweils eine Betriebsstellung des Automatikgetriebes zugeordnet ist, dadurch gekennzeichnet, daß mit dem Wählhebel (1), in zwei im wesentlichen senkrecht aufeinander stehenden Schaltgassen, in jeder der zwei Betriebsarten maximal vier Betriebsstellungen auswählbar sind und daß in einer dritten Betriebsart mit dem Wählhebel (1) Tempomatfunktionen gesteuert werden können.

2. Wähleinrichtung nach Anspruch 1, dadurch gekennzeichnet, daß eine vom Wählhebel (1) getrennte Umschalteinrichtung (4) zum Umschalten zwischen den Betriebsarten vorhanden ist.

3. Wähleinrichtung nach einem der Ansprüche 1 oder 2, dadurch gekennzeichnet, daß der Wählhebel als Lenkstockhebel (9) ausgebildet ist.

4. Wähleinrichtung nach einem der Ansprüche 2 oder 3, dadurch gekennzeichnet, daß die vom Wählhebel (1) getrennte Umschalteinrichtung (4) am Lenkrad (10), insbesondere durch Drucktaster, ausgebildet ist.

5. Wähleinrichtung nach einem der Ansprüche 1 bis 4, dadurch gekennzeichnet, daß eine im wesentlichen von einem Fahrer weg gerichtete Bewegung des Wählhebels (1) in der ersten Betriebsart, bei stillstehendem Fahrzeug, Einlegen der Fahrstufe D des Automatikgetriebes, und bei vorwärts fahrendem Fahrzeug, Halten einer konstanten Geschwindigkeit, und in der zweiten Betriebsart, sequentielles Hochschalten des Automatikgetriebes, und in der dritten Betriebsart, Beschleunigen während der Fahrt, bewirkt.

6. Wähleinrichtung nach einem der Ansprüche 1 bis 5, dadurch gekennzeichnet, daß eine im wesentlichen zu einem Fahrer hin gerichtete Bewegung des Wählhebels (1) in der ersten Betriebsart, bei stillstehendem Fahrzeug, Einlegen der Fahrstufe R des Automatikgetriebes, und in der zweiten Betriebsart sequentielles Zurückschalten des Automatikgetriebes, und in der dritten Betriebsart, Reduzieren der gegenwärtigen Geschwindigkeit bis zum Stillstand, bewirkt.

7. Wähleinrichtung nach einem der Ansprüche 1 bis 6, dadurch gekennzeichnet, daß eine im wesentlichen quer zu einem Fahrer, zu diesem hin gerichtete Bewegung des Wählhebels (1) in der ersten Betriebsart, Einlegen der Fahrstufe P des Automatikgetriebes, und in der dritten Betriebsart, Löschen der gegenwärtigen Einstellungen, bewirkt.

8. Wähleinrichtung nach einem der Ansprüche 1 bis 7, dadurch gekennzeichnet, daß eine im wesentlichen quer zu einem Fahrer, von diesem weg gerichtete Bewegung des Wahlhebels (1) in der ersten Betriebsart, Einlegen der Fahrstufe N des Automatikgetriebes, und in der dritten Betriebsart, Löschen der gegenwärtigen Einstellungen, bewirkt.

9. Wähleinrichtung nach einem der Ansprüche 1 bis 8, dadurch gekennzeichnet, daß, bei einer Fahrgeschwindigkeit des Kraftfahrzeugs unterhalb einem bestimmten Betrag, die Getriebesteuereinrichtung selbsttätig von der eventuell ausgewählten dritten Betriebsart in die erste Betriebsart umschaltet.
